(19) Europäisches Patentamt
European Patent Office
Office européen des brevets

(11) Veröffentlichungsnummer: **0 014 773**
**B1**

# (12) EUROPÄISCHE PATENTSCHRIFT

(45) Veröffentlichungstag der Patentschrift: **08.12.82**

(51) Int. Cl.³: **C 08 F 10/00**, C 08 F 4/64

(21) Anmeldenummer: **79105419.0**

(22) Anmeldetag: **31.12.79**

(54) **Verfahren zur Herstellung von weitgehend amorphen Homo- und/oder Copolymerisaten von alpha-Olefinen mit 3 oder mehr C-Atomen.**

(30) Priorität: **21.02.79 DE 2906639**

(43) Veröffentlichungstag der Anmeldung: **03.09.80 Patentblatt 80/18**

(45) Bekanntmachung des Hinweises auf die Patenterteilung: **08.12.82 Patentblatt 82/49**

(84) Benannte Vertragsstaaten: **BE FR GB IT NL**

(56) Entgegenhaltungen:
**DE-A-1 795 483**
**DE-A-2 259 516**
**DE-A-2 329 641**

(73) Patentinhaber: **CHEMISCHE WERKE HÜLS AG, Postfach 1320, D-4370 Marl 1 (DE)**

(72) Erfinder: **Herrmann, Christoph, Dr., Heyerhoffstrasse 17 a, D-4370 Marl (DE)**
Erfinder: **Streck, Roland, Dr., Leverkusener Strasse 12, D-4370 Marl (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 014 773 B1

BUNDESDRUCKEREI BERLIN

# Verfahren zur Herstellung von weitgehend amorphen Homo- und/oder Copolymerisaten von α-Olefinen mit 3 oder mehr C-Atomen

Es ist bekannt, daß man α-Olefine mit 3 oder mehr Kohlenstoffatomen, wie z. B. Propen und Buten-(1), mit Hilfe von Katalysatorkombinationen aus Übergangsmetallverbindungen und Metallalkylen, sogenannter Ziegler-Natta-Katalysatoren, polymerisieren kann.

Ferner ist bekannt, daß bestimmte dieser Katalysatorkombinationen — z. B. δ-$TiCl_3$ mit $AlEt_2Cl$ [M. Ogushi, CEER 8, (1976) 49] — die Ausbildung eines hohen Anteils in isotaktischer Anordnung eingebauter Monomereinheiten besonders fördern. Wegen dieses stereospezifischen Aufbaus besitzen so hergestellte Polyolefine die Fähigkeit zur Kristallisation, die sich auf eine Reihe von Eigenschaften, z. B. Härte, Steifigkeit, Festigkeit, günstig auswirkt, so daß vor allem Polypropylen zu einem vielseitig verwendbaren und technisch in großen Mengen hergestellten Kunststoff geworden ist.

Neben den isotaktischen Polymerisaten liefern alle diese Katalysatoren aber auch mehr oder weniger große Mengen an ataktischen Anteilen, die sich u. a. durch weitgehende Amorphität, Löslichkeit in Kohlenwasserstoffen und Klebrigkeit von diesen unterscheiden. Sie werden gewöhnlich bei der Aufarbeitung der bei der Polymerisation eingesetzten Lösungsmittel isoliert und stellten ursprünglich einen unerwünschten Zwangsanfall dar, den es zu minimieren galt. Durch die Bemühungen zur Verwertung dieses Zwangsanfalls sind aber inzwischen zahlreiche Verwertungsmöglichkeiten erschlossen worden. So können die ataktischen Polymeranteile bei der Beschreibung von Textilien, vornehmlich von Teppichrücken, und Papier eingesetzt werden. Außerdem finden sie Verwendung bei der Herstellung von Schalldämpf- und Klebstoffen, von Dichtungs- und Vergußmassen, von Straßenmarkierungsmassen sowie von bituminösen Massen, die im Straßenbau und bei der Dachabdeckung eingesetzt werden.

Die Entwicklung neuer Verfahren zur Herstellung von Polyolefinen, vornehmlich von Polypropylen (DE-OS 2 621 874 und 2 635 163) brachte außer stark verbesserter Katalysatorausnutzung auch höhere Stereospezifität, so daß der Anfall an ataktischem Material teilweise nicht mehr ausreichte, um die Anforderungen des Marktes zu decken.

Es wurden daher auch Verfahren zur Herstellung von weitgehend ataktischen Polyolefinen entwickelt. Bei diesen Verfahren kann man die Erniedrigung der Stereospezifität durch mehrere Maßnahmen, die manchmal auch gemeinsam angewandt werden, erreichen. So wird z. B. anstelle des definierten α-$TiCl_3$ eine in situ durch Reduktion von $TiCl_4$ und/oder von Titan-(IV)-alkoholaten hergestellte Titanverbindung benutzt (DE-PS 17 95 483). Eine andere Möglichkeit besteht in der Verwendung von Aluminiumtrialkylen oder fluorierten Aluminiumalkylen anstelle des zur Herstellung von Polyolefinen mit hoher Stereospezifität vielfach eingesetzten Diethylaluminiummonochlorids (DE-PS 19 31 421 und BE-PS 733 692). Weiterhin ist es möglich, amorphe Produkte mit Hilfe eines Ziegler-Natta-Katalysators herzustellen, der Magnesiumchlorid enthält (DE-OS 2 153 520 und DE-PS 2 329 641). Schließlich kann man die Titankomponente durch $VCL_4$ ersetzen (JP 4 005 753).

Die bisherigen Verfahren des Standes der Technik sind jedoch mit Mängeln behaftet. So ist z. B. die Katalysatorausnutzung wenig befriedigend, so daß ohne mehr oder weniger aufwendige Waschverfahren der Gehalt an Katalysatorrückständen im Polymerisat relativ hoch ist. Das hat bekanntermaßen zur Folge, daß die Stabilität der Produkte beeinträchtigt ist.

Teilweise ist auch der Gehalt an isotaktischen Anteilen noch so hoch, daß das gewünschte Maß von Amorphität nur durch Polymerisation bei erhöhter Temperatur über 100°C (DE-PS 2 329 641) erreicht werden kann.

Die vorliegende Erfindung stellte sich daher die Aufgabe, ein Verfahren zur Herstellung von Homo- und/oder Copolymerisaten von α-Olefinen mit 3 oder mehr Kohlenstoffatomen zu entwickeln, mit dem es möglich ist, die Katalysatorausnutzung zu steigern und den amorphen Anteil der Polymerisate innerhalb eines wirtschaftlich interessanten Temperaturbereichs während der Polymerisation zu erhöhen.

Diese Aufgabe wurde dadurch gelöst, daß man die in Frage kommenden α-Olefine mit Hilfe eines Katalysators, bestehend aus

1. den Umsetzungsprodukten von
   1.1 μ-Oxoalkoxiden der allgemeinen Formel

$$Ti_xO_{(x+y-1)}M_y^m(OR^1)_{(2x+1)}Z_{(m-1)y} \qquad (I)$$

in der

1.1.1 M eines der zweiwertigen Metalle Mg, Mn oder Zn, eines der dreiwertigen Metalle Al, La oder Ce, oder das vierwertige Metall Ti bedeutet,

1.1.2 $R^1$ einen Alkylrest mit 1 bis 10 C-Atomen,

1.1.3 Z einen Carboxylat- oder Alkoholatrest darstellt,

1.1.4 x eine ganze oder gebrochene Zahl von 1 bis 4,

1.1.5 y eine ganze oder gebrochene Zahl von 1 bis 2 und

1.1.6 m gleich 2, 3 oder 4 sein kann, mit

1.2 halogenhaltigen aluminiumorganischen Verbindungen der allgemeinen Formel

$$R^2_n AlX_{3-n} \qquad (II)$$

in der

1.2.1 $R^2$ einen Alkylrest mit 1 bis 16 C-Atomen,

1.2.2 X Chlor, Brom oder Jod darstellt, und

1.2.3 n eine ganze oder gebrochene Zahl von 0,5 bis 2,5 sein kann, und

2. Aluminiumtrialkylen mit bis zu 16 C-Atomen in jedem Alkylrest polymerisiert.

Unter weitgehend amorphen Homo- und Copolymerisaten werden im Rahmen dieser Erfindung Produkte verstanden, die eine Heptanlöslichkeit von >50 Gewichtsprozent besitzen. Für Homo- und Copolymerisate, die ganz oder überwiegend aus $\alpha$-Olefinen mit wenigstens 4 Kohlenstoffatomen aufgebaut sind, kann als weiteres Maß für die Amorphität di Etherlöslichkeit (Diethylether) herangezogen werden. Sie soll bei den nach dem erfindungsgemäßen Verfahren hergestellten Produkten —20 Gewichtsprozent, vorzugsweise >50 Gewichtsprozent, betragen.

Die heptan- bzw. etherlöslichen Anteile der Polymerisate werden dabei nach 16stündiger Extraktion der Proben im Soxhlet und anschließender Trocknung und Auswägung des Rückstandes bstimmt.

Die $\alpha$-Olefine mit 3 oder mehr C-Atomen, die beim erfindungsgemäßen Verfahren eingesetzt werden können, besitzen die allgemeine Formel $R^3 - CH{=}CH_2$, wobei $R^3$ ein Alkylrest mit 1 bis 30 C-Atomen sein kann. Vorzugsweise werden Propen und Buten-(1) eingesetzt. Alle Monomere können sowohl homopolymerisiert als auch untereinander in jedem beliebigen Verhältnis copolymerisiert werden. Darüber hinaus ist auch die Copolymerisation mit Ethylen in einer solchen Menge möglich, daß im Copolymeren bis zu 20 Gewichtsprozent, vorzugsweise 0,1 bis 10 Gewichtsprozent, Ethylen enthalten sind.

Die als Übergangsmetallkomponenten der beim erfindungsgemäßen Verfahren einsetzbaren Katalysatoren verwendeten $\mu$-Oxoalkoxide der allgemeinen Formel

$$Ti_xO_{(x+y-1)}M^m_y(OR^1)_{(2x+1)}Z_{(m-1)y} \qquad (I)$$

können leicht nach bekannten Methoden hergestellt werden [F. Schmid in Houben-Weyl, Band 6/2 (1963) S. 23, 24 und Ph. Teyssie et al., Inorg. Chem. Acta 19 (1976) 203].

In dieser Formel (I) stellt M ein Metall unterschiedlicher Wertigkeit, m=2, 3 oder 4, z. B. mit m=2: Magnesium, Mangan, Zink, mit m=3: Aluminium, Lanthan, Cer und mit m=4: Titan, vorzugsweise Magnesium, $R^1$ einen Alkylrest mit 1 bis 10 C-Atomen, vorzugsweise 2 bis 4 C-Atomen, Z einen Carboxylatrest mit bis zu 18 C-Atomen, vorzugsweise den Acetatrest oder einen Alkoholatrest mit 1 bis 10 C-Atomen, vorzugsweise 2 bis 4 C-Atomen, dar, und kann x eine ganze oder gebrochene Zahl von 1 bis 4 und y eine ganze oder gebrochene Zahl von 1 bis 2 sein.

Ein möglicher Weg ihrer Herstellung ist die thermische Esterabspaltung aus Gemischen von Titanalkoholaten der allgemeinen Formel $Ti(OR^1)_4$, in der die Reste $R^1$ gleiche oder verschiedene Alkylreste mit 1 bis 10 C-Atomen, vorzugsweise 2 bis 4 C-Atomen, sein können, und wasserfreien Carboxylaten, vorzugsweise Acetaten, von 2-, 3- oder 4wertigen Metallen, wie z. B. Magnesium, Mangan, Zink, Aluminium, Lanthan, Cer oder Titan, oder aus Gemischen von Titancarboxylaten bzw. Titanalkoholatcarboxylaten der allgemeinen Formel $TiZ_4$, in der Z die in der Formel (I) angegebene Bedeutung hat, mit Metallalkoholaten $M^m(OR^1)_m$, wobei M, $R^1$ und m ebenfalls die in der Formel (I) angegebene Bedeutung haben.

Ein weiterer Weg zur Herstellung von $\mu$-Oxoalkoxiden ist die partielle Cohydrolyse von 2:1-Alkoholat-Komplexen nach Meerwein bzw. Alkoholatgemischen von $Ti(OR^1)_4$ und $M^m(OR^1)_m$, wobei M, $R^1$ und m wiederum die in der Formel (I) angegebene Bedeutung haben. Die Reste $R^1$ im Titan- und Metallalkoholat brauchen dabei nicht identisch zu sein.

Besonders geeignet sind $\mu$-Oxoalkoxide mit M=Magnesium und einem Molverhältnis von Mg : Ti im Bereich 0,25 bis 1,5.

Es besteht die Möglichkeit, die $\mu$-Oxoalkoxide vor der Umsetzung mit der Komponente 1.2 zu modifizieren. Dies kann einmal geschehen durch Fixierung auf hydroxylgruppenhaltige Träger, wie z. B. Kieselsäure ($SiO_2$) und Aluminiumoxide, oder durch Covermahlen mit halogenhaltigen Trägern, wie z. B. Magnesiumchlorid, Seltenerdchlorid und Aluminiumchlorid [K. H. Reichert, Chem.-Ing.-Techn. 49 (1977) 626—33 und J. C. W. Chien, J. T. T. Hsieh, Journ. of Polym. Sci., Polym. Chem. Ed. 14 (1976) 1915—32]. Zum anderen durch Umsetzung mit Vanadinoxitrichlorid, Vanadintetrachlorid oder Titantetrachlorid. Die vorher in den einsetzbaren Lösemitteln löslichen $\mu$-Oxoalkoxide werden durch diese Modifizierungsverfahren heterogenisiert.

Eine bevorzugte Modifizierung ist die Umsetzung mit $TiCl_4$ und den gesamten Vanadinchloriden. Bei der Umsetzung mit den Vanadinchloriden ist ein Molverhältnis von 0,5 bis 2 mit modifiziertem $\mu$-Oxoalkoxid besonders bevorzugt.

Die reinen und modifizierten $\mu$-Oxoalkoxide sind in der Wirksamkeit den Gemischen der

Ausgangsstoffe weit überlegen, was a priori nicht zu erkennen war.

Für die Umsetzung mit den µ-Oxoalkoxiden der allgemeinen Formel (I) geeignete halogenhaltige aluminiumorganische Verbindungen der allgemeinen Formel

$$R^2_n AlX_{3-n} \qquad (II)$$

in der $R^2$ einen Alkylrest mit 1 bis 16 C-Atomen, X Chlor, Brom oder Jod darstellt, vorzugsweise Chlor, und n eine ganze oder gebrochene Zahl von 0,5 bis 2,5 sein kann, sind z. B. Diethylaluminiummonochlorid, Ethylaluminiumdichlorid, Isobutylaluminiumdichlorid und Gemische dieser Verbindungen.

Zur Umsetzung der Katalysatorkomponente 1.1 mit der Katalysatorkomponente 1.2 wird 1.1 in einem gesättigten Kohlenwasserstoff wie z. B. Hexan, Heptan, das üblicherweise in der Ethylenpolymerisation verwandte hydrierte Benzin, Cyclohexan, Isopropylcyclohexan und hydrierte Dieselöle gelöst und in einer Konzentration von 0,25 bis 1,5 Mol Übergangsmetall pro Liter Lösemittel mit einer entsprechenden Lösung von 1.2 vereinigt. Dabei geht man so vor, daß man die im allgemeinen 0,25- bis 1,5molaren Lösung von 1.1 vorlegt und vorzugsweise eine 1molare Lösung von 1.2 in einem der oben angeführten Lösemittel bei möglichst konstanter Temperatur im Bereich von 0 bis 100° C zutropfen läßt. Anschließend erfolgt eine Alterung der entstandenen Suspension über einen Zeitraum von 1 bis 10 Stunden bei Temperaturen im Bereich von 50 bis 200° C. Danach wird filtriert, der Niederschlag mit einem o. a. Lösemittel gewaschen und schließlich suspendiert.

Der polymerisationsaktive Katalysator wird zweckmäßigerweise in der Polymerisationsapparatur durch Reaktion der Katalysatorkomponente 2 mit dem Umsetzungsprodukt aus 1.1 und 1.2 hergestellt. Als Katalysatorkomponente 2 werden dabei Aluminiumtrialkyle mit bis zu 16, vorzugsweise 3 bis 10 C-Atomen, in jedem Alkylrest eingesetzt. Besonders bevorzugt ist Tri-iso-butylaluminium. Im allgemeinen werden die Aluminiumtrialkyle in etwa 1molarer Lösung in einem gesättigten Kohlenwasserstoff, der mit dem Polymerisationslösemittel verträglich ist, in einer solchen Menge eingesetzt, daß das Verhältnis Ti : Al (aus Katalysatorkomponente 2) 1 : 2 bis 1 : 20 beträgt.

Die Polymerisation kann kontinuierlich oder diskontinuierlich durchgeführt werden. Als Lösemittel werden gewöhnlich solche eingesetzt, wie sie bereits bei der Herstellung der µ-Oxoalkoxide beschrieben sind. Es können aber auch flüssige $C_3$- und/oder $C_4$-Schnitte oder verflüssigte α-Olefine als Lösemittel eingesetzt werden. Die Polymerisationstemperatur beträgt im allgemeinen 30 bis 150, vorzugsweise 40 bis 90° C.

Die Regelung der Molekulargewichte ist in bekannter Weise durch Zugabe von Wasserstoff möglich. Darüber hinaus werden die Molgewichte von der Polymerisationstemperatur, dem Druck und der Zusammensetzung der einzelnen Katalysatorkomponenten beeinflußt. Die Aufarbeitung der Polymerisationsansätze kann nach den üblichen Methoden des Standes der Technik, wie z. B. Ausfällen mit einem Alkohol bzw. einem Alkohol-Wasser-Gemisch oder durch Abdestillieren des Lösemittels, erfolgen. Die Methode der Wahl ist abhängig von der Viskosität der enthaltenen Polymerlösung bzw. -suspension.

Die nach dem erfindungsgemäßen Verfahren hergestellten Polymerisate bzw. Copolymerisate können für alle Verwendungszwecke eingesetzt werden, die bereits für den Einsatz ataktischer Polyolefine genannt wurden.

In den nachfolgenden Beispielen und Vergleichsbeispielen, die das erfindungsgemäße Verfahren näher erläutern, wurde die Viskositätszahl I ($cm^3/g$) nach DIN 53 728 und die heptan- bzw. etherlöslichen Anteile der Polymerisate durch 16stündige Extraktion im Soxhlet bestimmt.

Sofern nicht anders angegeben, sind alle Prozentangaben Gewichtsprozente. Die verwendeten Abkürzungen haben folgende Bedeutung:

TEA = Triethylaluminium
TIBA = Tri-iso-butylaluminium
TNOA = Tri-n-octylaluminium
TNDA = Tri-n-decylaluminium
TNHA = Tri-n-hexadecylaluminium
Bu = n-Butyl
Et = Ethyl
AcO = Acetat

Herstellung von µ-Oxoalkoxiden durch a) Cohydrolyse und b) Esterkondensation

Bei der Methode a) wurden 600 mMol $Ti(OBu)_4$ und 300 mMol $Mg(OEt)_2$ in 350 ml n-Butanol eine halbe Stunde am Rückfluß gekocht. Dann wurden 600 mMol Wasser in 250 ml Butanol zugetropft und die Reaktionsmischung 10 Stunden unter Rückfluß erhitzt. Nach Abkühlen wurde filtriert und bis zur Trockene eingedampft. Das Destillat wurde gaschromatographisch untersucht und es wurden neben dem Lösemittel Butanol 500 mMol Ethanol aus dem Magnesiumethylat gefunden. Zur Weiterverarbeitung wurde der feste Rückstand, der 18,5% Titan und 2,86% Magnesium enthielt, was

einem Molverhältnis Mg : Ti von 0,31 entspricht, in 1 l einer hydrierten Benzinfraktion (Sdpkt. ca. 68° C) aufgenommen. Dieses µ-Oxoalkoxid wird nachfolgend mit I bezeichnet.

Bei der Methode b) wurden die in Tabelle 1 angegebenen Reaktionspartner in den genannten Mengen — gelöst in Decalin — während der angegebenen Zeit am Rückfluß erhitzt. Nach Abziehen des Esters und des Decalins wurde der verbleibende Rückstand in hydriertem Benzin aufgenommen und gegebenenfalls filtriert. Die Konzentration an Titan betrug ca. 0,4 Mol pro Liter. In den Destillaten wurden die angegebenen Mengen Butylessigester gaschromatographisch bestimmt.

Tabelle 1

| Bez. des µ-Oxoalkoxids | 1 $Ti(OBu)_4$ (mM) | 2 $Mg(OEt)_2$ (mM) | 3 $Mg(OAc)_2$ (mM) | 4 Decalin (ml) | 5 Reaktionszeit (h) | 6 AcOBu (mM) | 7 Mg/Ti (Mol/Mol) |
|---|---|---|---|---|---|---|---|
| II | 400 | | 200 | 400 | 10 | 193 | 0,35 |
| III | 400 | | 200 | 400 | 15 | 220 | 0,65 |
| IV | 200 | | 600 | 200 | 10 | 221 | 0,91 |
| V | 100[1]) | 100 | | 100 | 10 | [2]) | |
| | | | 100 | 100 | 10 | | 1,37 |
| VI | 400 | | 400 | 600 | 12 | 483[3]) | 0,87 |

[1]) Als Ti-Verbindung wurde nicht $Ti(OBu)_4$, sondern $Ti(OBu)_2(OAc)_2$ genommen und nacheinander mit je 100 mMol $Mg(OEt)_2$ und $Mg(OAc)_2$ umgesetzt.
[2]) nicht bestimmt.
[3]) Kontinuierliche Abdestillation des Esters.

Umsetzung der µ-Oxoalkoxid-Lösungen (hydriertes Benzin als Lösemittel) mit halogenhaltigen aluminiumorganischen Verbindungen

Die µ-Oxoalkoxide I bis VI und die in den Vergleichsbeispielen eingesetzten Verbindungen wurden jeweils mit einer 1molaren halogenhaltigen aluminiumorganischen Verbindungen der allgemeinen Formel II in hydriertem Benzin in dem jeweils angegebenen Molverhältnis Aluminium : Titan umgesetzt. Dabei wurde die Lösung mit der Katalysatorkomponente 1.2 tropfenweise zu der vorgelegten Lösung der Katalysatorkomponente 1.1 bei 25 bis 30° C gegeben. Anschließend wurde 1 Stunde — wenn nicht anders angegeben — bei 68° C (Sdpkt. des hydrierten Benzins) gealtert. Nach Filtration der Suspension wurde der Niederschlag mit dem angegebenen Lösemittel mehrmals gewaschen, in hydriertem Benzin aufgenommen und die so erhaltene Suspension bei der Polymerisation eingesetzt.

Beispiele 1 bis 5 und Vergleichsbeispiele A und B

Ein 5-l-Stahlautoklav wurde jeweils mit 2,5 l hydriertem Benzin beschickt, dem 6 ml einer 1molaren $AlEt_3$-Lösung in hydriertem Benzin und die jeweils angegebene Menge Titan (in mMol) hinzugefügt wurden. Der Autoklav wurde anschließend mit Wasserstoff bei Normaldruck (=1 bar) abgedeckt und auf 50° C aufgeheizt. Nach Erreichen dieser Temperatur wurde die Propenleitung geöffnet und das zugeführte Propen eine halbe Stunde bei dem erstgenannten Überdruck polymerisiert. Dann wurde die Propenzufuhr eingestellt und weitere 1½ Stunden bei fallendem Druck weiterpolymerisiert. Der Enddruck ist in der Spalte Druckabfall ($\Delta pC_3$) der Tabelle 2 angegeben. Nachdem die Polymerlösung bzw. -suspension auf Raumtemperatur (25° C) abgekühlt worden war, wurde sie aus dem Autoklaven gedrückt und das Polymerisat mit 5 l einer Mischung aus Isopropanol/Methanol (Vol.-Verh. 1 : 2) ausgefällt. Das Produkt wurde anschließend durch Trocknen bei 50° C im Vakuum von Lösungsmittelresten befreit. Zum Vergleich wurden in dem Vergleichsbeispiel A die nicht sauerstoffverknüpften Alkoholate und in Vergleichsbeispiel B ein handelsüblicher $\alpha$-$TiCl_3$-Kontakt (ATR) eingesetzt. Die Ausbeute wurde angegeben als Aktivität in g Polypropylen pro mMol Titan (g PP/mM Ti).

Tabelle 2

| Beispiel bzw. Vgl.-beispiel Nr. | $\mu$-Oxoalkoxid (1.1) bzw. Vergleichsprodukt | Katalysator-komponente 1.2 | Mol-Verhältnis Al/Ti | Menge Ti in 1.1 u. 1.2 (mM) | Druckabfall $\Delta pC_3$ (bar) | Aktivität g PP/mM Ti | I ($cm^3/g$) | heptanlösliche Anteile (%) |
|---|---|---|---|---|---|---|---|---|
| 1 | I | $AlEtCl_2$ | 3 | 3 | 6,3–2,3 | 182 | 183 | 71 |
| 2 | II | $AlEtCl_2$ | 3 | 2 | 4,9–1,3 | 246 | 115 | 70 |
| 3 | III | $AlEtCl_2$ | 3 | 1,5 | 7,0–3,8 | 252 | 229 | 75 |
| 4 | IV | $AlEtCl_2$ | 3 | 0,77 | 5,0–2,8 | 242 | 100 | 75 |
| 5 | V | $AlEtCl_2$ | 3 | 1 | 5,3–3,7 | 132 | 70 | 78 |
| A | 2 $Ti(OBu)_4$ + $Mg(OEt)_2$ | $AlEtCl_2$ | 3 | 1 | 7,3–6,3 | 30 | 81 | 84 |
| B | $\alpha$-$TiCl_3$ | – | – | 3 | 6,9–2,0 | 73 | 164 | 66 |

Beispiele 6 bis 12

Gegenüber den Beispielen 1 bis 5 wurden Änderungen bei der Komponente 1.2, beim Lösemittel (LM) und der Alterungstemperatur vorgenommen. Die Aktivierung der Umsetzungsprodukte aus 1.1 und 1.2 erfolgte jeweils mit 10 mMol $AlEt_3$. Die Ergebnisse zeigt Tabelle 3.

Tabelle 3

| Bsp.-Nr. | 1 | 2 | 3 | 4 | 5 | 6 | 7 | 8 | 9 |
|---|---|---|---|---|---|---|---|---|---|
| | μ-Oxoalk-oxid | Katalyt.-Komp. 1.2 | Mol-Verh. | Alterungs-Temp. | Menge Ti in 1.1 und 1.2 | $\Delta pC_3$ | Aktivität | I | heptan-lösliche Anteile |
| | | | Al/Ti | (°C) | (mM) | (bar) | g PP/mM Ti | ($cm^3/g$) | (%) |
| 6 | IV | $AlEtCl_2$ | 3 | 98[1]) | 0,81 | 4,9–1,3 | 528 | 106 | 78 |
| 7 | IV | $AlEtCl_2$ | 3 | 145[2]) | 0,82 | 5,1–3,6 | 126 | 77 | 80 |
| 8 | V | $AlEtCl_2$ | 6 | 68 | 1,0 | 4,2–1,0 | 420 | 80 | 74 |
| 9 | V | $AlEtCl_2$ | 6 | 68 | 1,46 | 4,5–0,4 | 420 | 111 | 70 |
| 10 | V | $AlEtCl_2$ | 12 | 68 | 1,42 | 4,9–2,0 | 63 | 99 | 67 |
| 11 | V | $AlEt_2Cl$ | 6 | 68 | 2,0 | 3,8–0,9 | 140 | 72 | 76 |
| 12 | V | $AlEt_2Cl$ | 12 | 68 | 1,0 | 4,5–0,6 | 456 | 76 | 74 |

[1]) LM = Heptan.
[2]) LM = Decalin.

## Beispiele 13 bis 18

Bei diesen Beispielen wurden die µ-Oxoalkoxide vor der Umsetzung mit der Komponente 1.2 mit einem Metallhalogenid der angegebenen Art behandelt. In den Beispielen 13 und 14 wurde die µ-Oxoalkoxid-Lösung mit $VOCl_3$ in dem angegebenen Molverhältnis 1h am Rückfluß gekocht; in den Beispielen 15 bis 18 wurde die µ-Oxoalkoxid-Lösung mit dem angegebenen Metallhalogenid 3 h in einer Kugelmühle bei 25° C vermahlen. Anschließend erfolgte die Umsetzung mit der Komponente 1.2 bei 68° C. Die Aktivierung und die Polymerisation erfolgten wie bei den Beispielen 1 bis 5 beschrieben. Die Ergebnisse ezigt Tabelle 4.

Tabelle 4

| Bsp.-Nr. | 1 | 2 | 3 | 4 | 5 | 6 | 7 | 8 | 9 | 10 |
|---|---|---|---|---|---|---|---|---|---|---|
| | μ-Oxoalk-oxid | Metall-halogenid | Mol-Verh. | Katalyt.-Komp. 1.2 | Mol-Verh. | Menge Ti in 1.1 und 1.2 | ΔpC3 | Aktivität | I | heptan-lösliche Anteile |
| | | | M/Ti | | Al/Ti | (mM) | (bar) | g PP/mM Ti | ($cm^3/g$) | (%) |
| 13 | VI | $VOCl_3$ | 1 | $AlEtCl_2$ | 6 | 1,1[1]) | 6,5–4,2 | 555[1]) | 194 | 75 |
| 14 | II | $VOCl_3$ | 2 | $AlEt_2Cl$ | 18 | 0,5[1]) | 4,9–1,7 | 804[1]) | 123 | 68 |
| 15 | II | $MgCl_2$ | 1 | $AlEtCl_2$ | 3 | 1,05 | 8,4–6,1 | 342 | 123 | 77 |
| 16 | II | $MgCl_2$ | 10 | $AlEtCl_2$ | 3 | 0,98 | 8,2–3,5 | 700 | 157 | 75 |
| 17 | VI | $MgCl_2$ | 1 | $AlEtCl_2$ | 3 | 1,1 | 8,7–4,8 | 578 | 65 | 76 |
| 18 | I | $AlCl_3$ | 5 | $AlEt_2Cl$ | 3 | 3,0 | 6,0–4,2 | 70 | 162 | 62 |

[1]) Titan und Vanadin.

Beispiele 19 bis 25

Die Arbeitsweise bei der Polymerisation mit den Katalysatoren in den Beispielen 1 bis 5 wurde wiederholt mit der Abänderung, daß die Aktivierung der gewaschenen Kontakte im Autoklaven statt bisher mit TEA in den folgenden Beispielen mit Aluminiumalkylen mit Kohlenwasserstoffresten größer als 2 C-Atome erfolgte. Außerdem wurde in einigen Beispielen das Verhältnis Al/Ti der Komponenten 1.1 und 1.2 sowie der $H_2$-Partialdruck (Beispiele 24 und 25) geändert. Zur Aktivierung wurden jeweils 10 mMol des angegebenen Aluminiumtrialkyls eingesetzt. Die Ergebnisse zeigt Tabelle 5.

Tabelle 5

| Bsp.-Nr. | μ-Oxoalk-oxid | Katalyt.-Komp. 1.2 | Mol-Verh. | Menge Ti in 1.1 u. 1.2 | Katalyt.-Komp. 2 | $\Delta pC_3$ | Polym. Temp. | $H_2$ | Aktivität | I | heptan-lösliche Anteile |
|---|---|---|---|---|---|---|---|---|---|---|---|
| | | | Al/Ti | (mM) | | (bar) | (°C) | (bar) | g PP/ mM Ti | ($cm^3/g$) | (%) |
| 19 | IV | $AlEtCl_2$ | 3 | 0,5 | TIBA | 5,0–0,9 | 50 | 1,0 | 912 | 87 | 85 |
| 20 | IV | $AlEtCl_2$ | 3 | 0,5 | TNOA | 4,4–0,7 | 50 | 1,0 | 696 | 87 | 83 |
| 21 | IV | $AlEtCl_2$ | 3 | 0,5 | TNDA | 5,0–0,9 | 50 | 1,0 | 672 | 71 | 86 |
| 22 | IV | $AlEtCl_2$ | 3 | 0,5 | TIBA | 5,2–0,8 | 70 | 1,0 | 866 | 92 | 85 |
| 23 | IV | $AlEtCl_2$ | 3 | 0,5 | TIBA | 5,6–2,1 | 85 | 1,0 | 510 | 74 | 81 |
| 24 | VI | $AlEtCl_2$ | 6 | 1,0 | TEA | 4,6–0,5 | 50 | 1,5 | 504 | 63 | 74 |
| 25 | VI | $AlEtCl_2$ | 6 | 1,0 | TEA | 4,6–0,9 | 50 | 2,0 | 350 | 43 | 78 |

Beispiele 26 bis 29 und Vergleichsbeispiele C und D

Die Arbeitsweise bei den Polymerisationsversuchen 1 bis 5 wurde wiederholt mit der Abänderung, daß 2,5 l hydriertes Benzin im Autoklaven vorgelegt und der Aktivator, 10 ml einer 1m-TIBA-Hexan-Lösung, und die Katalysatorsuspension (1.1 und 1.2) in der angegebenen Menge hinzupipettiert wurden. Nach Abdeckung mit Wasserstoff wurden anschließend 800 ml Propen unter Druck hinzugegeben und die Polymerisation durch Aufheizen auf 50° C gestartet. Nach 2 Stunden wurde auf 25° C abgekühlt, die viskose Polymerlösung aus dem Autoklaven gedrückt und analog den Versuchen 1 bis 5 aufgearbeitet. In dem Vergleichsversuch C wurden die angeführten Verbindungen, die nicht miteinander reagiert hatten, eingesetzt und unter den gleichen Bedingungen getestet. Aus dem Vergleich der Beispiele 26 und C geht deutlich hervor, daß das kondensierte Oxoalkoxid wesentlich aktivere Katalysatoren liefert als die unverknüpften Ausgangsverbindungen. Die Ergebnisse zeigt Tabelle 6.

Tabelle 6

| Bsp.-Nr. | 1 | 2 | 3 | 4 | 5 | 6 | 7 | 8 |
|---|---|---|---|---|---|---|---|---|
| | μ-Oxoalkoxid (1.1) bzw. Vergleichsprodukt | Katalyt.-Komp. 1.2 | Mol-Verh. | Menge Ti in 1.1 u. 1.2 | Druckabfall | Aktivität | I | heptan-lösliche Anteile |
| | | | Al/Ti | (mM) | $\Delta pC_3$ | g PP/mM Ti | $(cm^3/g)$ | (%) |
| 26 | V | $AlEtCl_2$ | 6 | 0,28 | 6,4–1,1 | 1240 | 77 | 75 |
| 27 | VI | $AlEtCl_2$ | 6 | 0,3 | 6,4–2,4 | 946 | 76 | 79 |
| 28 | VI | $AlEt_{1,5}Cl_{1,5}$ | 6 | 0,35 | 6,4–1,3 | 930 | 79 | 83 |
| 29 | VI + $VOCl_3$(Ti : V = 1) | $AlEt_2Cl$ | 12 | 0,13 | 6,5–1,7 | 2480[1]) | 97 | 74 |
| C | $Ti(OBu)_4 + Mg(OAc)_2$ | $AlEtCl_2$ | 6 | 0,75 | 6,0–0,1 | 507 | 61 | 85 |
| D | $\alpha$-$TiCl_3$ | – | – | 1,0 | 6,3–3,8 | 149 | 96 | 71 |

[1]) g PP/mM (Ti + V)

Beispiele 30 bis 42 und Vergleichsbeispiele E bis H

In einen 5-l-Stahlautoklaven wurden nacheinander 2,5 l hydriertes Benzin, das in der nachfolgenden Tabelle 7 angegebene Aluminiumtrialkyl in der jeweiligen Menge und außerdem die jeweils angegebene Menge Titan gegeben. Nach Stickstoffabdeckung (1 bar) wurden 400 ml flüssiges Buten-(1), in den Tabellen als $C_4$ abgekürzt, zugegeben und der Ansatz jeweils auf 50° C aufgeheizt. Nach 2 Stunden wurde die zähviskose Polymerlösung abgelassen und wie in den Beispielen 1 bis 5 beschrieben aufgearbeitet. Die Ergebnisse zeigt Tabelle 7.

Tabelle 7

| Bsp.-Nr. | Umsetzungsprodukt 1.1 u. 1.2 gemäß Bsp.-Nr. | Menge Ti in 1.1 und 1.2 (mM) | Katalyt.-Komp. 2 | Menge Katalyt.-Komp. 2 (mM) | $\Delta pC_4$ (bar) | Aktivität (g PB-(1)/mM Ti | I ($cm^3/g$) | etherlösliche Anteile (%) |
|---|---|---|---|---|---|---|---|---|
| 30 | 1 | 2,53 | TEA | 6 | 1,5–1,2 | 28 | 417 | 21 |
| 31 | 2 | 3,0 | TEA | 6 | 1,2–0,4 | 68 | 291 | 38 |
| 32 | 4 | 0,76 | TEA | 10 | 1,1–1,0 | 71 | 185 | 59 |
| 33 | 5 | 2,0 | TEA | 10 | 1,3–1,2 | 13 | 533 | 23 |
| 34 | 6 | 0,81 | TEA | 10 | 1,2–0,7 | 201 | 391 | 44 |
| 35 | 8 | 1,0 | TEA | 10 | 1,2–0,2 | 273 | 161 | 51 |
| 36 | 9 | 2,0 | TEA | 10 | 1,1–0,2 | 103 | 188 | 54 |
| 37 | 10 | 1,42 | TEA | 10 | 1,2–0,7 | 127 | 304 | 44 |
| 38 | 11 | 2,0 | TEA | 10 | 1,1–0,8 | 61 | 221 | 51 |
| 39 | 12 | 1,0 | TEA | 10 | 1,2–0,6 | 213 | 283 | 39 |
| 40 | 8 | 0,11 | TIBA | 10 | 1,2–0,8 | 1018 | 381 | 48 |
| 41 | 8 | 0,5 | TNOA | 10 | 1,0–0,0 | 526 | 251 | 64 |
| 42 | 8 | 0,28 | TNHA | 10 | 1,2–0,6 | 774 | 345 | 60 |

Fortsetzung Tabelle 7

| Vgl.-Bsp.-Nr. | Vergleichsprodukte | Menge Ti in Vgl.-Prod. (mM) | Katalyt.-Komp. 2 | Menge Katalyt.-Komp. 2 (mM) | $\Delta pC_4$ (bar) | Aktivität (g PB-(1)/mM Ti | I ($cm^3/g$) | etherlösliche Anteile (%) |
|---|---|---|---|---|---|---|---|---|
| E | A | 2,0 | TEA | 6 | 1,7–1,6 | 1 | – | – |
| F | $Ti(OBu)_4 + Mg(OEt)_2$ | 0,8 | TEA | 10 | 1,1–0,8 | 107 | 200 | 49 |
| G | C | 0,75 | TIBA | 10 | 1,1–0,4 | 254 | 285 | 60 |
| H | $\alpha$-$TiCl_3$ | 3,0 | TIBA | 6 | 1,6–0,7 | 85 | 463 | 49 |

Beispiele 43 bis 46

In der in den vorhergehenden Beispielen beschriebenen Apparatur wurden 2,5 l hydriertes Benzin, 10 mMol TIBA und 0,38 mMol Ti in Form der Umsetzungsprodukte der Katalysatorkomponenten 1.1 und 1.2 des Versuchs 6 vorgelegt. Dazu wurden die flüssigen Monomeren Proben und Buten-1 in der jeweils angegebenen Menge nacheinander zudosiert. Es wurden 1,5 bar Wasserstoff aufgedrückt und 2 Stunden bei 50° C polymerisiert. Nach Abkühlen auf jeweils 25° C wurde die Copolymerlösung aus dem Autoklaven gedrückt und das Lösemittel destillativ entfernt. Die Ergebnisse zeigt Tabelle 8.

Tabelle 8

| Bsp.-Nr. | Propen (g) | Buten-(1) (g) | g Polymer/ mM Ti | I ($cm^3/g$) | etherlösliche Anteile (%) |
|---|---|---|---|---|---|
| 43 | 26 | 331 | 794 | 69 | 78,7 |
| 44 | 52 | 301 | 710 | 61 | 91 |
| 45 | 105 | 240 | 780 | 61 | 95,4 |
| 46 | 157 | 180 | 850 | 62 | 93,4 |

**Patentansprüche**

1. Verfahren zur Herstellung von weitgehend amorphen Homo- und/oder Copolymerisaten von $\alpha$-Olefinen mit 3 oder mehr C-Atomen durch Polymerisation der $\alpha$-Olefine mit Hilfe eines titanhaltigen Ziegler-Natte-Katalysators, dadurch gekennzeichnet, daß man einen Katalysator bestehend aus

1. den Umsetzungsprodukten von
   1.1 $\mu$-Oxoalkoxiden der allgemeinen Formel

$$Ti_xO_{(x+y-1)}M_y^m(OR^1)_{(2x+1)}Z_{(m-1)y} \qquad (I)$$

in der
1.1.1 M eines der zweiwertigen Metalle Mg, Mn oder Zn, eines der dreiwertigen Metalle Al, La oder Ce, oder das vierwertige Metall Ti bedeutet,
1.1.2 $R^1$ einen Alkylrest mit 1 bis 10 C-Atomen,
1.1.3 Z einen Carboxylat- oder Alkoholrest darstellt,
1.1.4 x eine ganze oder gebrochene Zahl von 1 bis 4,
1.1.5 y eine ganze oder gebrochene Zahl von 1 bis 2 und
1.1.6 m gleich 2, 3 oder 4 sein kann, mit

1.2 halogenhaltigen aluminiumorganischen Verbindungen der allgemeinen Formel

$$R_n^2AlX_{3-n} \qquad (II)$$

in der
1.2.1 $R^2$ einen Alkylrest mit 1 bis 16 C-Atomen,
1.2.2 X Chlor, Brom oder Jod darstellt, und
1.2.3 n eine ganze oder gebrochene Zahl von 0,5 bis 2,5 sein kann, und

2. Aluminiumtrialkylen mit bis zu 16 C-Atomen in jedem Alkylrest verwendet.

2. Verfahren nach Anspruch 1, dadurch gekennzeichnet, daß die Komponente 1.1 vor der Umsetzung mit der Komponente 1.2 auf einen hydroxylgruppenhaltigen Träger aufgebracht wird.

3. Verfahren nach Anspruch 1, dadurch gekennzeichnet, daß die Komponente 1.1 vor der Umsetzung mit der Komponente 1.2 mit einem Metallhalogenid behandelt wird.

**Claims**

1. Process for the preparation of largely amorphous homopolymers and/or copolymers of $\alpha$-olefines having 3 or more C atoms by polymerisation of the $\alpha$-olefines with the aid of a titanium-containing

Ziegler-Natta catalyst, characterised in that a catalyst is used which consists of

1. the reaction products of
   1.1 μ-oxoalkoxides of the general formula

$$Ti_xO_{(x+y-1)}M_y^m(OR^1)_{(2x+1)}Z_{(m-1)y} \quad (I)$$

   in which
   1.1.1 M denotes one of the divalent metals Mg, Mn or Zn, one of the trivalent metals Al, La or Ce, or the tetravalent metal Ti,
   1.1.2 $R^1$ represents an alkyl radical having 1 to 10 C atoms,
   1.1.3 Z represents a carboxylate radical or alcohol radical,
   1.1.4 x can be a whole number or fractional number from 1 to 4,
   1.1.5 y can be a whole number or fractional number from 1 to 2 and
   1.1.6 m can be equal to 2, 3 or 4, with
   1.2 halogen-containing aluminium-organic compounds of the general formula

$$R_n^2AlX_{3-n} \quad (II)$$

   in which
   1.2.1 $R^2$ represents in alkyl radical having 1 to 16 C atoms,
   1.2.2 X represents chlorine, bromine or iodine and
   1.2.3 n can be a whole number or fractional number from 0.5 to 2.5, and
2. aluminium trialkyls having up t0 16 C atoms in each alkyl radical.

2. Process according to Claim 1, characterised in that component 1.1 is applied to a support containing hydroxyl groups, before being reacted with the component 1.2.

3. Process according to Claim 1, characterised in that component 1.1 is treated with a metal halide before being reacted with the component 1.2.

**Revendications**

1. Procédé de préparation de produits largement amorphes d'homopolymérisation et/ou de copolymérisation d'alphaoléfines comportant trois atomes de carbone ou davantage, par polymérisation des alpha-oléfines à l'aide d'un catalyseur Ziegler-Natta renfermant du titane, caractérisé par le fait qu'on utilise un catalyseur constitué par:

1. les produits résultant de la réaction:
   1.1 de μ-oxo-alcoxydes de la formule générale:

$$Ti_xO_{(x+y-1)}M_y^m(OR^1)_{(2x+1)}Z_{(m-1)y} \quad (I)$$

   dans laquelle:
   1.1.1 M représente l'un des métaux bivalents que sont Mg, Mn ou Zn, l'un des métaux trivalents que sont Al, La ou Ce, ou le métal tétravalent qu'est Ti,
   1.1.2 $R^1$ représente un reste alkyle comportant de de I à 10 atomes de carbone,
   1.1.3 Z représente un reste carboxylate ou un reste alcoolique,
   1.1.4 x peut être un nombre entier ou fractionnaire d'une valeur de I à 4,
   1.1.5 y peut être un nombre entier ou fractionnaire d'une valeur de I à 2, et
   1.1.6 m peut être égal à 2, 3 ou 4,
   1.2 des composés organo-aluminiques halogénés de la formule générale:

$$R_n^2AlX_{3-n} \quad (II)$$

   dans laquelle:
   1.2.1 $R^2$ représente un reste alkyle comportant de 1 à 16 atomes de carbone,
   1.2.2 X représente le chlore, le brome ou l'iode,
   1.2.3 n est un nombre entier ou fractionnaire d'une valeur de 0,5 à 2,5,
2. par des trialkyl-aluminiums comportant jusqu'à 16 atomes de carbone dans chaque reste alkyle.

2. Procédé selon la revendication 1, caratérisé par le fait qu'avant de le faire réagir sur le composant 1.2, on apporte le composant 1.1 sur un support renfermant des groupes hydroxyle.

3. Procédé selon la revendication 1, caractérisé par le fait qu'avant de faire réagir le composant 1.1 sur le composant 1.2, on le traite par un halogénure métallique.